# EUROPÄISCHE PATENTANMELDUNG

(11) **EP 1 225 027 A1**
(43) Veröffentlichungstag der Anmeldung: **24.07.2002**
(21) Anmeldenummer: 02000415.6
(22) Anmeldetag: 08.01.2002
(51) Int. Cl.: B29C 47/00, B29C 47/30, B29C 47/86, B29C 35/08, B27N 3/28

(54) **Verfahren und Vorrichtung für Herstellung von Agglomeratkörpern**

(30) Priorität: 18.01.2001 DE 10101981
(71) Anmelder: Linn High Term GmbH, 92275 Eschenfelden (DE); Rudolf Ohlinger GmbH & Co. KG, 67136 Fussgönheim (DE)
(72) Erfinder: Linn, Horst, 92275 Eschenfelden (DE); Ohlinger, Rudolf, 67069 Ludwigshafen (DE)
(74) Vertreter: LOUIS, PÖHLAU, LOHRENTZ & SEGETH

(57) **Zusammenfassung**

Es wird ein Verfahren zur Herstellung Agglomeratkörpem wie -korken beschrieben, wobei ein entsprechendes Granulat mit einem Bindemittel gemischt und das Gemisch eines Extruders (12) zu einem Strang extrudiert wird. Der extrudierte Strang wird stromabwärts nach dem Extruder (12) durch eine Mikrowellen-Heizeinrichtung (14) durchgeleitet und mit einer Mikrowellenstrahlung bestrahlt, so daß das Bindemittel auspolymerisiert. Der polymerisierte Materialstrang wird dann in Einzelstücke abgelängt. Infolge der optimalen Polymerisation des Bindemittels kann auf eine Zwischenlagerung der abgelängten Einzelstücke verzichtet werden. Die abgelängten Einzelstücke des polymerisierten Materialstranges werden dann auf Einzelteillängen auseinandergeschnitten. Die zur Anwendung gelangende Mikrowellen-Heizeinrichtung (14) weist in einem Gehäuse (28) einen quaderförmigen Körper (22) aus mikrowellen-transparentem Material auf, der mit voneinander beabstandeten und zueinander parallelen Durchgangslöchern (32) für die extrudierten Stränge ausgebildet ist. An das Gehäuse (28) ist mindestens eine Mikrowellen-Strahlenquelle (34) angekoppelt.

## Beschreibung

Die Erfindung betrifft ein Verfahren zur Herstellung von Agglomeratkörpern, wie beispielsweise Agglomeratkorken, wobei ein entsprechendes Materialgranulat mit einem Bindemittel gemischt und das Gemisch aus Materialgranulat und Bindemittel mittels eines Extruders zu einem Strang extrudiert wird, der stromabwärts nach dem Extruder mittels einer Heizeinrichtung einer Wärmebehandlung unterzogen wird, bei der das Bindemittel auspolymerisiert, wonach der polymerisierte Materialstrang in Einzelstücke abgelängt wird, die gelagert und nach der Lagerung auf Einzelteillängen auseinandergeschnitten werden, sowie eine Heizeinrichtung zur Durchführung dieses Verfahrens.

Bei einem bekannten Verfahren zur Herstellung von Agglomeratkorken wird der extrudierte Strang aus dem Gemisch aus Korkgranulat und Bindemittel durch einen rohrförmigen Mantelheizer durchgeleitet. Ein solcher Mantelheizer weist infolge der Wellenlänge seiner Wärmestrahlung den Mangel auf, daß die Wärmestrahlung nur oberflächlich in den extrudierten Strang eindringt, so daß eine zuverlässige Polymerisation des Bindemittels nur in diesen Oberflächenschichten gegeben ist. Im Kern des extrudierten Stranges kann die Polymerisation mangelhaft sein. Aus diesem Grunde erfolgt bislang die Lagerung der Einzelstücke des extrudierten Korkstranges über eine Zeitspanne von ca. zwei Wochen oder länger. Das stellt einen erheblichen Mangel dar.

Aus der DE 198 02 297 C1 ist ein Verfahren zum Sterilisieren von Korken, zur Reduktion chemischer Kontaminanten, sowie zur Verbesserung der Polymerisation, Aushärtung und Stabilisierung von Klebern bei Agglomeratkorken unter Verwendung von Mikrowellenstrahlung bekannt, wobei die Korken einer Mikrowellenstrahlung von 20 bis 1000 W/kg Korken während einer Zeit von 5 bis 30 Minuten ausgesetzt werden.

Der Erfindung liegt die Aufgabe zugrunde, ein Verfahren der eingangs genannten Art sowie eine Heizeinrichtung zur Durchführung dieses Verfahrens zu schaffen, wobei die Lagerzeit der abgelängten Einzelstücke des Materialstrangs auf einige wenige Tage reduziert ist oder überhaupt eliminiert wird.

Diese Aufgabe wird verfahrensgemäß dadurch gelöst, daß eine Anzahl extrudierte Stränge simultan durch eine Mikrowellen-Heizeinrichtung durchgeleitet und in der Mikrowellen-Heizeinrichtung mit einer Mikrowellenstrahlung bestrahlt werden, wobei jeder Strang mit einem Durchmesser von ≤ 40 mm, vorzugsweise zwischen 26 und 26,5 mm Durchmesser mit einer Extrusionsgeschwindigkeit von 3 bis 5 cm/min, vorzugsweise 4 cm/min, extrudiert und durch die Mikrowellen-Heinzeinrichtung mit einer Mikrowellen-Heizzonenlänge von 10 bis 15 cm, vorzugsweise 12 cm, hindurchgeleitet wird.

Die Mikrowellenstrahlung dringt in den jeweiligen extrudierten Strang bis in dessen Innerstes ein, so daß eine vollkommene Polymerisation des Bindemittels des extrudierten Stranges erfolgt. Aufgrund dieser zuverlässigen und vollständigen Polymerisation des Bindemittels ist es in vorteilhafter Weise nicht mehr erforderlich, die abgelängten Einzelstücke des polymerisierten Materialstranges, beispielsweise Korkstranges, zu lagern bzw. bis zur Weiterverarbeitung, das heißt bis zum Auseinanderschneiden auf Einzelteillängen zwischenzuspeichern. Ein Lager- bzw. Speicherraum ist in vorteilhafter Weise also bei der Durchführung dieses erfindungsgemäßen Verfahrens nicht mehr erforderlich.

Bei dem Bindemittel für das Korkgranulat handelt es sich beispielsweise um einen PU-Kleber. Selbstverständlich können auch andere polymerisierbare Kleber zur Anwendung gelangen.

Die zur Durchführung des erfindungsgemäßen Verfahrens vorgesehene erfindungsgemäße Heizeinrichtung weist einen quaderförmigen Körper aus einem mikrowellen-transparenten Material auf, der in einem Gehäuse vorgesehen ist und der eine Anzahl voneinander beabstandete und zueinander parallele Durchgangslöcher kreisrunden Querschnittes für extrudierte Stränge aus Materialgranulat, bei dem es sich z.B. um Korkganulat handelt, und Bindemittel aufweist, wobei an das Gehäuse mindestens eine Mikrowellen-Strahlungsquelle angekoppelt ist. Bei dem mikrowellen-transparenten Material des quaderförmigen Körpers der erfindungsgemäßen Heizeinrichtung handelt es sich zum Beispiel um Teflon, PP, Quarzglas, Aluminiumoxid oder dergleichen. Der quaderförmige Körper mit Durchgangslöchern kann auch von einzelnen Röhren gebildet sein.

Zweckmäßigerweise sind die Durchgangslöcher in einer Mittelebene des quaderförmigen Körpers zwischen seiner Grund- und Deckfläche vorgesehen. Zumindest an die Grundfläche des Gehäuses können eine Anzahl Mikrowellen-Strahlenquellen angekoppelt sein. Selbstverständlich ist es auch möglich, nicht nur an die Grundfläche des Gehäuses, sondern auch - oder nur - an dessen Deckfläche und/oder an mindestens einer Seitenfläche jeweils mindestens eine oder eine Anzahl Mikrowellen-Strahlenquellen anzukoppeln. Zur Ankopplung der jeweiligen Mikrowellen-Strahlenquelle an den quaderförmigen Körper kann bspw. ein Hohlleiter oder ein Hornstrahler vorgesehen sein. Die/jede Mikrowellen-Strahlenquelle kann auch direkt in das Gehäuse hineinstrahlen.

Erfindungsgemäß ergibt sich der Vorteil, daß bei einer relativ kurzen Mikrowellen-Heizzonenlänge von 10 bis 15 cm eine ausgezeichnete Durchsatzleistung von Einzelstücke polymerisierter Korkstränge und aus diesen hergestellte Einzelkorklängen realisierbar sind, wobei eine optimale Reduktion chemischer Kontaminanten sowie eine optimale Sterilisation der hergestellten Einzelkorklängen gewährleistet wird. Desweiteren ist die Polymerisation, die Aushärtung und Stabilisierung von zur Anwendung gelangenden Bindemitteln in vorteilhafter Weise zuverlässig und reproduzierbar gewährleistet. Infolge ihrer kurzen Heizzonenlänge benötigt die erfindungsgemäße Vorrichtung nur einen kleinen Platzbedarf.

Weitere Einzelheiten, Merkmale und Vorteile ergeben sich aus der nachfolgenden Beschreibung eines Ausführungsbeispiel der erfindungsgemäßen Heizeinrichtung zur Durchführung des erfindungsgemäßen Verfahrens sowie einer Blockdarstellung des Flußdiagrammes des erfindungsgemäßen Verfahrens. Es zeigen:
- Fig. 1: eine Blockdarstellung des Flußdiagrammes des erfindungsgemäßen Verfahrens zur Herstellung beispielsweise von Agglomeratkorken, und
- Fig. 2: eine Vorderansicht einer Ausführungsform der bei dem erfindungsgemäßen Verfahren zur Anwendung gelangenden erfindungsgemäßen Heizeinrichtung.

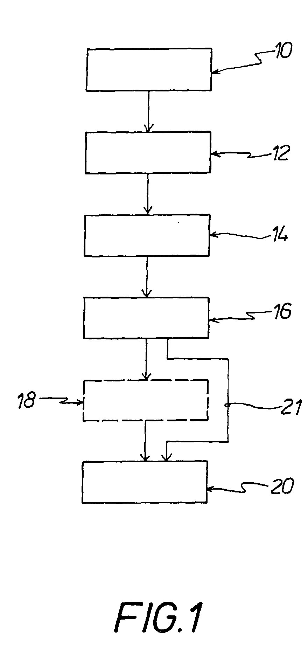

Fig. 1 zeigt in einer Blockdiagrammdarstellung das erfindungsgemäße Verfahren zur Herstellung von Agglomeratkorken, wobei in einem Mischer ein Mischen 10 von Korkgranulat und Bindemittel erfolgt. Bei diesem Bindemittel handelt es sich beispielsweise um einen PU-Kleber. Das Gemisch aus Korkgranulat und Bindemittel wird mittels eines Extruders 12 in eine Anzahl Stränge extrudiert. Die extrudierten Stränge werden stromabwärts nach dem Extruder 12 mittels einer Heizeinrichtung 14 einer Wärmebehandlung unterzogen, bei der das Bindemittel auspolymerisiert. Jeder polymerisierte Korkstrang wird danach in Einzelstücke abgelängt. Dieses Ablängen ist durch den Block 16 verdeutlicht. Diese Einzelstücke weisen zum Beispiel eine Länge von 1 m auf. Die abgelängten Einzelstücke können im Bedarfsfall kurz (1 bis 2 Tage) gelagert werden. Das ist durch den strichlierten Block 18 verdeutlicht. Die gelagerten Einzelstücke werden dann auf Einzelkorklängen auseinandergeschnitten. Das ist durch den Block 20 verdeutlicht.

Die Lagerung 18 kann in vorteilhafter Weise auch gänzlich entfallen, das heißt die abgelängten Einzelstücke gemäß dem Block 16 können direkt und unmittelbar in Einzelkorklängen auseinandergeschnitten werden, was durch den den Block 18 umschließenden Pfeil 21 angedeutet ist.

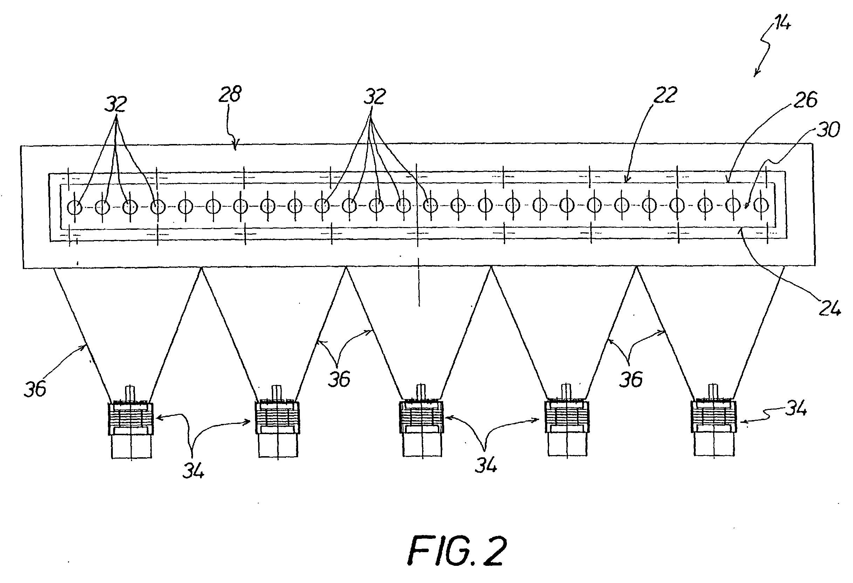

Fig. 2 zeigt eine Vorderansicht einer Ausbildung der Heizeinrichtung 14 zum Auspolymerisieren des Bindemittels von aus einem Gemisch aus Korkgranulat und Bindemittel extrudierten Strängen. Die Heizeinrichtung 14 weist einen quaderförmigen Körper 22 auf, der zur Führung bzw. Formgebung des Korkstranges dient und der aus einem mikrowellen-transparenten Material wie Teflon, Quarzglas, Aluminiumoxid oder dergleichen besteht. Der quaderförmige Körper 22 weist eine Grundfläche 24 und eine dazu parallele Deckfläche 26 auf, er ist in einem Gehäuse 28 angeordnet. Der quaderförmige Körper 22 weist in einer Mittelebene 30 zwischen der Grund- und Deckfläche 24 und 26 voneinander beabstandet und zueinander parallel eine Anzahl Durchgangslöcher 32 auf. Durch die Durchgangslöcher 32 wird jeweils ein extrudierter Strang aus Korkgranulat und Bindemittel durchgeleitet, um in der Heizeinrichtung 14 gleichzeitig eine entsprechende Anzahl extrudierter Stränge auszupolymerisieren.

An das Gehäuse 28 des quaderförmigen Körpers 22 der Heizeinrichtung 14 sind Mikrowellen-Strahlenquellen 34 beispielsweise mittels Hornstrahler 36 angekoppelt. Diese Ankoppelung kann der Grundfläche 24 und/oder an der Deckfläche 26 und/oder an den Seitenflächen erfolgen.

Bei einer anderen Ausführung kann auf den quaderförmigen Körper 22 auch verzichtet werden, d.h. anstelle des quaderförmigen Körpers 22 können auch einzelne Rohre zur Anwendung gelangen.

## Patentansprüche

1. Verfahren zur Herstellung von Agglomeratkörpern, wie Agglomeratkorken usw., wobei ein Materialgranulat mit einem Bindemittel gemischt und das Gemisch aus Materialgranulat und Bindemittel mittels eines Extruders (12) zu einem Strang extrudiert wird, der stromabwärts nach dem Extruder (12) einer Wärmebehandlung unterzogen wird, bei der das Bindemittel auspolymerisiert, wonach der polymerisierte Materialstrang in Einzelstücke abgelängt wird, die auf Einzelteillängen auseinandergeschnitten werden,
**dadurch gekennzeichnet,**
**daß** eine Anzahl extrudierte Stränge simultan durch eine Mikrowellen-Heizeinrichtung (14) durchgeleitet und in der Mikrowellen-Heizeinrichtung (14) mit einer Mikrowellenstrahlung bestrahlt werden, wobei jeder Strang mit einem Durchmesser von ≤ 40 mm, vorzugsweise zwischen 26 und 26,5 mm Durchmesser mit einer Extrusionsgeschwindigkeit von 3 bis 5 cm/min, vorzugsweise 4 cm/min, extrudiert und durch die Mikrowellen-Heizeinrichtung (14) mit einer Mikrowellen-Heizzonenlänge von 10 bis 15 cm, vorzugsweise 12 cm, hindurchgeleitet wird.

2. Heizeinrichtung zur Durchführung des Verfahrens nach Anspruch 1,
**gekennzeichnet durch**
einen quaderförmigen Körper (22) aus einem mikrowellen-transparenten Material, der in einem Gehäuse (28) vorgesehen ist und der eine Anzahl voneinander beabstandete und zueinander parallele Durchgangslöcher (32) kreisrunden Querschnitts für extrudierte Stränge aus Materialgranulat und Bindemittel aufweist, wobei an das Gehäuse (28) mindestens eine Mikrowellen-Strahlenquelle (34) angekoppelt ist.

3. Einrichtung nach Anspruch 2,
**dadurch gekennzeichnet,**
**daß** die Durchgangslöcher (32) in einer Mittelebene (30) zwischen der Grundund der Deckfläche (24 und 26) des quaderförmigen Körpers (22) vorgesehen sind.

4. Einrichtung nach Anspruch 2,
**dadurch gekennzeichnet,**
**daß** an die Grundfläche (24) und/oder an die Deckfläche und/oder an die Seitenflächen des Gehäuses (28) Mikrowellen-Strahlenquellen (34) angekoppelt sind.

5. Einrichtung nach Anspruch 4,
**dadurch gekennzeichnet,**
**daß** zur Ankopplung der jeweiligen Mikrowellen-Strahlenquelle (34) an das Gehäuse (28) ein Hohlleiter oder ein Hornstrahler (36) vorgesehen ist, oder daß die jeweilige Mikrowellen-Strahlenquelle (34) direkt in das Gehäuse (28) hineinstrahlt.
